(19) Europäisches Patentamt
European Patent Office
Office européen des brevets

(11) **EP 3 867 501 B1**

(12) **EUROPÄISCHE PATENTSCHRIFT**

(45) Veröffentlichungstag und Bekanntmachung des Hinweises auf die Patenterteilung:
**30.11.2022   Patentblatt 2022/48**

(21) Anmeldenummer: **19787263.3**

(22) Anmeldetag: **17.10.2019**

(51) Internationale Patentklassifikation (IPC):
**F01D 25/18** *(2006.01)*      **F02C 6/12** *(2006.01)*

(52) Gemeinsame Patentklassifikation (CPC):
**F01D 25/18; F02C 6/12;** F05D 2220/40;
F05D 2240/55; F05D 2260/98

(86) Internationale Anmeldenummer:
**PCT/EP2019/078178**

(87) Internationale Veröffentlichungsnummer:
**WO 2020/079128 (23.04.2020 Gazette 2020/17)**

(54) **ABGASTURBOLADER MIT VERBESSERTER WELLENDICHTUNG**

EXHAUST GAS TURBOCHARGER WITH IMPROVED SHAFT SEAL

TURBOCOMPRESSEUR À GAZ D'ÉCHAPPEMENT À JOINT ÉTANCHE POUR ARBRE AMÉLIORÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2018   EP 18201214**

(43) Veröffentlichungstag der Anmeldung:
**25.08.2021   Patentblatt 2021/34**

(73) Patentinhaber: **Turbo Systems Switzerland Ltd.**
**5400 Baden (CH)**

(72) Erfinder:
• **KREIENKAMP, Christian**
**79713 Bad Säckingen (DE)**

• **MAURER, Florian**
**8050 Zürich (CH)**

(74) Vertreter: **Zimmermann & Partner**
**Patentanwälte mbB**
**Postfach 330 920**
**80069 München (DE)**

(56) Entgegenhaltungen:
EP-A1- 3 363 997      DE-A1-102007 027 869
DE-A1-102015 014 613      DE-B3-102013 005 167
US-A- 4 268 229      US-B2- 9 988 976

## Beschreibung

Technisches Gebiet der Erfindung

Die Erfindung betrifft einen Abgasturbolader mit verbesserter Wellendichtung.

Stand der Technik

Abgasturbolader werden mit Wellendichtungen ausgestattet, die in den meisten Fällen aus zwei Elementen bestehen. Bei einem dieser Elemente handelt es sich um eine Öldichtung, die zur Abdichtung des Innenbereiches des Lagergehäuses des jeweiligen Abgasturboladers gegen eine Ölleckage nach außen vorgesehen ist. Eine derartige Öldichtung kann in Form einer Labyrinthdichtung ausgebildet sein. Bei dem anderen Element handelt es sich um eine Gasdichtung, die zur Abdichtung des Innenbereichs des Lagergehäuses gegen einen Gaseintritt von außen vorgesehen ist. Eine derartige Gasdichtung kann beispielsweise in Form einer Kolbenringdichtung ausgebildet sein.

Für Abgasturbolader mit Axialturbinen werden als Gasdichtung häufig auch Labyrinth-Drosseldichtungen in Kombination mit Sperrluft eingesetzt, um einen Eintritt von Heissgas von der Turbinenseite in das Lagergehäuse zu verhindern. Die erforderliche Öldichtung wird häufig als Fangkammerlabyrinth ausgeführt.

Für Abgasturbolader mit Radialturbinen werden aus Platz-, Komplexitäts/Kosten- und Performancegründen häufig Kolbenringdichtungen ohne Sperrluft als Gasdichtung eingesetzt.

Aus der DE 10 2015 014 613 A1 ist eine Abdichtanordnung einer Welle an einem Gehäuseelement eines Abgasturboladers bekannt, bei welcher wenigstens zwei in axialer Richtung der Welle aufeinanderfolgende Dichtringe vorgesehen sind, mittels welchen die um eine Drehachse relativ zu dem Gehäuseelement drehbare Welle gegen das Gehäuseelement abgedichtet ist, wobei in axialer Richtung wenigstens ein Distanzring angeordnet ist.

Aus der DE 10 2013 005 167 B3 ist ein Abgasturbolader bekannt. Dieser Abgasturbolader weist zwei Kolbenringe auf, die zwischen einer Dichtungsbuchse und einer verdichterseitigen Abschlusswand angeordnet sind, wobei die Anordnung aus der Dichtungsbuchse, der Abschlusswand und eines Ölabweisblechs sowie der Kolbenringe zu einer Einheit vormontiert werden kann, die in diesem vormontierten Zustand in das Lagergehäuse des Abgasturboladers eingesetzt werden kann.

Aus der US 9,988,976 B2 ist ein Tuboloader bekannt, welcher ein Abspritzelement aufweist, welches axial zwischen einem Innenring und dem Nabenteil der Turbine des Abgasturboladers angeordnet ist und welches eine geneigte Oberfläche aufweist.

Zusammenfassung der Erfindung

Die Aufgabe der Erfindung besteht darin, einen Abgasturbolader anzugeben, der eine verbesserte Wellendichtung aufweist.

Diese Aufgabe wird durch einen Abgasturbolader mit den im Anspruch 1 angegebenen Merkmalen gelöst. Dieser Abgasturbolader enthält eine zwischen einem Verdichter und einer Turbine angeordnete, für eine Lagerung einer Welle ausgebildete Lagervorrichtung, welche ein Lagergehäuse aufweist, in welchem ein ölgeschmiertes Lager zur Lagerung der Welle angeordnet ist, wobei die Welle ein sich in Umfangsrichtung erstreckendes Abspritzelement zum Wegschleudern von Schmieröl aufweist, wobei das Lagergehäuse einen Ölablaufkanal für eine Abfuhr des Schmieröls aus dem Lagergehäuse aufweist, wobei der Innenbereich des Lagergehäuses einen Ölbegrenzungsraum bildet, der mit zwischen der Welle und dem Lagergehäuse angeordneten Dichtungen abgedichtet ist, wobei der Ölbegrenzungsraum ein Ablenkmittel aufweist, welches derart geformt ist, dass im Betrieb des Abgasturboladers vom Abspritzelement weggeschleudertes Schmieröl vom Ablenkmittel umgelenkt und in die zu den Dichtungen entgegengesetzte Richtung geleitet wird und wobei der Ölbegrenzungsraum in der Umgebung des Abspritzelements derart ausgebildet ist, dass das im Betrieb des Abgasturboladers vom Abspritzelement weggeschleuderte Schmieröl direkt vom Abspritzelement auf das Ablenkmittel überführbar ist, wobei das Abspritzelement derart geformt ist, dass das vom Abspritzelement weggespritzte Schmieröl eine radiale und eine axiale Richtungskomponente hat, wobei die axiale Richtungskomponente in die zu den Dichtungen entgegengesetzte Richtung gerichtet ist.

Gemäß einer Ausführungsform der Erfindung ist der Ölbegrenzungsraum in einem axial neben dem Abspritzelement angeordneten Abschnitt der Welle zur Welle hin durch einen mit dem Lagergehäuse verbundenen Lagerflansch begrenzt. Gemäß einer Ausführungsform kann der Ölbegrenzungsraum eine Fangrinne zum Auffangen des vom Ablenkmittel her eintreffenden Schmieröls aufweisen. Die Fangrinne kann beispielsweise als Teil des Lagerflansches ausgebildet sein. Die Fangrinne kann mindestens ein Wandelement zur Verhinderung des Zurücklaufens des vom Ablenkmittel umgelenkten Schmieröls in Richtung zu den Dichtungen aufweisen. Das Wandelement kann insbesondere an einem der Turbine bzw. den Dichtungen zugewandten Ende des Lagerflansches angeordnet sein. Die Fangrinne kann derart geformt sein, dass sie im Betrieb des Abgasturboladers Schmieröl aus der Fangrinne in den Ölablaufkanal leitet.

Gemäß einer Ausführungsform ist der Lagerflansch als Teil eines in das Lagergehäuse entnehmbar eingesetzten Lagermoduls gestaltet, wobei das Lagermodul ein Lager für die Welle aufweist. Gemäß einer Ausführungsform ist der Lagerflansch entlang eines axialen Abschnitts umfangsmäßig um die Welle herum angeordnet.

Gemäß einer Ausführungsform begrenzt der Lagerflansch zumindest einen Teil des Ölbegrenzungsraums. Insbesondere kann eine radial innenliegende Begrenzung des Ölbegrenzungsraums zumindest teilweise durch den Lagerflansch gebildet werden. Vorzugsweise werden mehr als 50% oder sogar mehr als 75% der axialen Erstreckung der radial innenliegende Begrenzung des Ölbegrenzungsraums durch den Lagerflansch (gegebenenfalls einschließlich der Fangrinne) gebildet. Die radial äußere Begrenzung des Ölbegrenzungsraums kann durch das Lagergehäuse gebildet werden und insbesondere das Ablenkmittel, z.B. als schrägen Wandabschnitt des Lagergehäuses, umfassen.

Gemäß einer Ausführungsform der Erfindung ist das Ablenkmittel integrierter Bestandteil der Wand des Lagergehäuses.

Gemäß einer Ausführungsform der Erfindung ist das Ablenkmittel ein in den Ölbegrenzungsraum eingelegter Ring.

Gemäß einer Ausführungsform der Erfindung ist das Ablenkmittel konusförmig ausgebildet.

Gemäß einer Ausführungsform der Erfindung ist das Ablenkmittel bogenförmig ausgebildet.

Gemäß einer Ausführungsform der Erfindung ist das Ablenkmittel zumindest teilweise oberhalb der Welle angeordnet (also mit dem Halbraum überlappen, der oberhalb der die Turboladerachse enthaltenden horizontalen Ebene liegt), und kann insbesondere in der die Turboladerachse enthaltenden vertikalen Schnittebene oberhalb der Welle angeordnet sein.

Gemäß einer Ausführungsform der Erfindung ist das Abspritzelement eine Wellenschulter.

Gemäß einer Ausführungsform der Erfindung ist das Abspritzelement eine freistehende Schleuderscheibe.

Gemäß einer Ausführungsform der Erfindung vergrößert sich der Querschnitt des Ölbegrenzungsraums im Bereich zwischen dem Abspritzelement und dem Ablenkmittel mit zunehmenden Abstand von der Welle.

Gemäß einer Ausführungsform der Erfindung vergrößert sich der Querschnitt des Ölbegrenzungsraums im Bereich zwischen dem Abspritzelement und dem Ablenkmittel mit zunehmenden Abstand von der Welle stufenweise.

Gemäß einer Ausführungsform der Erfindung ist die Vergrößerung des Querschnitts des Ölbegrenzungsraums im Bereich zwischen dem Abspritzelement und dem Ablenkmittel zumindest teilweise durch eine Ausnehmung im Lagerflansch gebildet.

Gemäß einer Ausführungsform der Erfindung ist der Ölablaufkanal im Bereich einer Ölablaufmündung des Lagergehäuses zylindrisch ausgebildet und weist zwischen diesem zylindrisch ausgebildeten Bereich und der Welle eine in Richtung der Welle schräg verlaufende Ölablauframpe auf, durch welche der Ölablaufkanal in Richtung zur Welle verbreitert ist.

Gemäß einer Ausführungsform der Erfindung schließt die Ölablauframpe in einem an den zylindrisch ausgebildeten Bereich anschließenden ersten Rampenbereich relativ zur Welle einen ersten Winkel ein, der im Bereich zwischen 45° und 80° liegt.

Gemäß einer Ausführungsform der Erfindung schließt die Ölablauframpe in einem an den ersten Rampenbereich anschließenden zweiten Rampenbereich relativ zur Welle einen zweiten Winkel ein, der im Bereich zwischen 30° und 45° liegt.

Gemäß einer Ausführungsform der Erfindung weist der Abgasturbolader eine Abschirmung auf, die zur Abschirmung der Dichtungen gegen gespritztes Schmieröl in einem Bereich unterhalb der Welle angeordnet ist.

Gemäß einer Ausführungsform der Erfindung gilt für den Durchmesser des zylindrisch ausgebildeten Bereichs des Ölablaufkanals relativ zum Durchmesser der Welle des Abgasturboladers die folgende Beziehung:

$$F/D > 0{,}7,$$

wobei F der Durchmesser des zylindrischen ausgebildeten Bereichs des Ölablaufkanals und D der Durchmesser der Welle des Abgasturboladers ist.

Gemäß einer Ausführungsform der Erfindung gilt die folgende Beziehung:

$$(A + C)/D > 2{,}7,$$

wobei A der Abstand des von der Ölablaufmündung abgelegenen Endes der Ölablauframpe von der Welle, C der Abstand des der Ölablaufmündung näher gelegenen Endes der Ölablauframpe von der Welle und D der Durchmesser der Welle ist.

Gemäß einer Ausführungsform der Erfindung gilt die folgende Beziehung:

$$G/H < 1,$$

wobei G eine Abschirmung eines Quetschöldämpferspaltes und H der Außendurchmesser eines Radiallagers des Abgasturboladers ist,

Gemäß einer Ausführungsform der Erfindung gilt die folgende Beziehung:

$$H/D < 1,$$

wobei H der Außendurchmesser eines Radiallagers des Abgasturboladers und D der Durchmesser der Welle ist.

Gemäß einer Ausführungsform der Erfindung gilt die folgende Beziehung:

$$B/D > 0,2,$$

wobei B die Höhe einer Fangkammer und D der Durchmesser der Welle ist.

Gemäß einer Ausführungsform der Erfindung gilt die folgende Beziehung:

$$X/Z < 1,$$

wobei X der Winkel zwischen der Welle und dem Ablenkkonus und Z der Abspritzwinkel des Schmieröls von der Welle in Richtung zum Ablenkkonus ist,

Gemäß einer Ausführungsform der Erfindung gilt die folgende Beziehung:

$$(J + \sin(X) \cdot E)/D > 0,5,$$

wobei J der Abstand des der Welle nahegelegenen Endes des Ablenkkonus, X der Winkel zwischen der Welle und dem Ablenkkonus, E die axiale Länge des Ablenkkonus und D der Durchmesser der Welle ist.

Die vorstehend beschriebenen Merkmale dienen zu einer Entlastung der Dichtungen des Lagergehäuses, da sie das für eine Ölabfuhr aus dem Lagergehäuse unterhalb der Welle zur Verfügung stehende Gehäusevolumen vergrößern und einen definierten Transport bzw. eine gezielte Umlenkung des im Betrieb des Abgasturboladers von der Welle wegspritzenden Schmieröls weg von den Dichtungen des Lagergehäuses bewirken. Zusätzlich wird verhindert, dass bereits weggeschleudertes Schmieröl zurück in den Dichtungsbereich fliessen kann.

Kurze Beschreibung der Zeichnungen

Nachfolgend wird die Erfindung anhand von Ausführungsbeispielen beschrieben, die anhand der Zeichnungen näher erläutert werden. Hierbei zeigen:

Fig. 1    eine Querschnittsdarstellung eines Teilbereichs eines Abgasturboladers, in welchem die erfindungsgemäßen Komponenten des Abgasturboladers angeordnet sind,

Fig. 2    eine vergrößerte Darstellung eines Teilbereichs von Figur 1,

Fig. 3    eine Skizze zur Veranschaulichung einer auf einer Welle vorgesehenen freistehenden Schleuderscheibe und

Fig. 4    eine weitere Querschnittsdarstellung eines Teilbereichs eines Abgasturboladers, in welchem die erfindungsgemäßen Komponenten des Abgasturboladers angeordnet sind.

Ausführliche Beschreibung der Zeichnungen

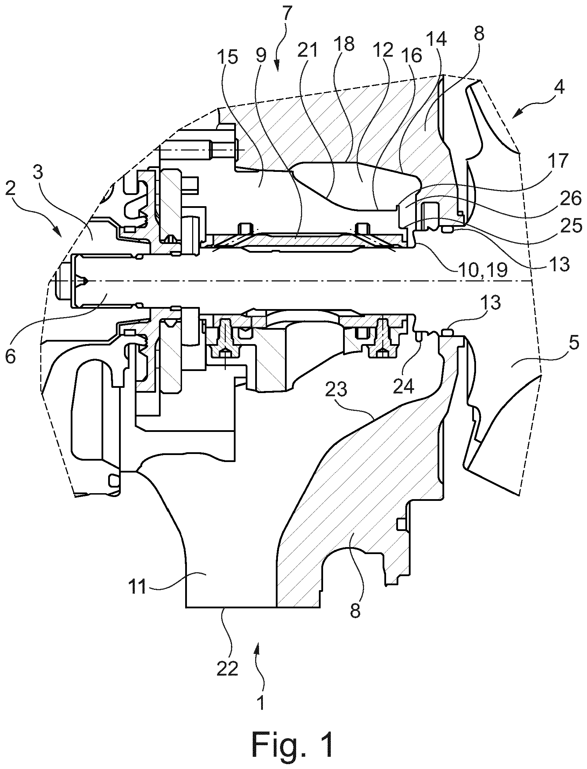

Die Figur 1 zeigt eine Querschnittsdarstellung eines Teilbereichs eines Abgasturboladers, in welchem die erfindungsgemäßen Komponenten des Abgasturboladers angeordnet sind. Dieser Abgasturbolader 1 enthält eine zwischen einem Verdichter 2 und einer Turbine 4 angeordnete, für eine Lagerung einer Welle 6 ausgebildete Lagervorrichtung 7. Diese Lagervorrichtung 7 weist ein Lagergehäuse 8 auf, in welchem ein ölgeschmiertes Lager 9 zur Lagerung der Welle angeordnet ist. Bei diesem Lager 9 handelt es sich beim gezeigten Ausführungsbeispiel um ein Radiallager. Der Verdichter 2 weist ein mit der Welle 6 fest verbundenes Verdichterrad 3 auf. Zur Turbine 4 gehört ein mit der Welle 6 fest verbundenes Turbinenrad 5.

Die Welle 6 weist ein Abspritzelement 10 auf, bei dem es sich beim gezeigten Ausführungsbeispiel um eine Wellenschulter 19 handelt. Bei dieser Wellenschulter 19 handelt es sich um eine Stufe der Welle 6, durch welche sich der Wellendurchmesser an dieser Stelle vergrößert.

Im Betrieb des Abgasturboladers 1 wird durch einen Spalt zwischen dem Radiallager 9 und der Welle 6 Schmieröl gefördert, welches am Abspritzelement 10 radial nach außen und durch die Formgebung der Wellenschulter auch leicht axial Richtung Lagergehäusemitte weggeschleudert wird. Dieses weggeschleuderte Schmieröl wird in einen Ölbegrenzungsraum 12, der im Innenbereich des Lagergehäuses 8 gebildet ist, geführt. Der Ölbegrenzungsraum 12 ist in der Umgebung des Abspritzelements 10, in welcher der Ölbegrenzungsraum 12 einen Spritzkanal 26 bildet, derart ausgebildet, dass das im Betrieb des Abgasturboladers 1 vom Abspritzelement 10 weggeschleuderte Schmieröl direkt vom Abspritzelement 10 auf ein Ablenkmittel 14 überführt wird. Dabei vergrößert sich der Querschnitt des Ölbegrenzungsraums 12 im Bereich zwischen dem Abspritzelement 10 und dem Ablenkmittel 14, d.h. im Spritzkanal 26, mit zunehmendem Abstand von der Welle 6.

Bei dem in der Figur 1 gezeigten Ausführungsbeispiel ist in diesem Spritzkanal 26 eine Stufe 25 vorgesehen, so dass sich der Querschnitt des Spritzkanals im Bereich zwischen dem Abspritzelement 10 und dem Ablenkmittel 14 mit zunehmendem Abstand von der Welle 6 stufenweise vergrößert. Alternativ zu dem in der Figur 1 gezeigten Ausführungsbeispiel kann sich der Querschnitt des Spritzkanals 26 im Bereich zwischen dem Abspritzelement 10 und dem Ablenkmittel 14 mit zunehmendem Abstand von der Welle 6 auch durch eine Verwendung mehrerer Stufen schrittweise vergrößern oder auch ohne Stufen kontinuierlich.

Die in der Figur 1 gezeigte Stufe 25 ist in einen Lagerflansch 15 eingebracht, der mit dem Lagergehäuse 8 des Abgasturboladers 1 fest verbunden ist oder Bestandteil des Lagergehäuses 8 ist, so dass die Vergrößerung des Querschnitts des Ölbegrenzungsraums 12 im Bereich zwischen dem Abspritzelement 10 und dem Ablenkmittel 14 teilweise durch eine Ausnehmung 21 im Lagerflansch 15 gebildet ist. Da -wie aus der Figur 1 ersichtlich ist- die dem Lagerflansch 15 im Spritzkanal 26 gegenüberliegende Wand, die ebenfalls Bestandteil des Lagergehäuses 8 ist, in Radialrichtung weitestgehend geradlinig verläuft, erfolgt die genannte Verbreiterung des Spritzkanals 26 asymmetrisch. Ein Vorteil einer derartigen asymmetrischen Verbreiterung des Spritzkanals 26 besteht darin, dass der Abgasturbolader 1 baulich kompakt gestaltet werden kann. Das weggeschleuderte Schmieröl hat dementsprechend nicht nur eine radiale sondern auch eine axiale Richtungskomponente, die durch die Formgebung des Abspritzelementes definiert wird.

Durch das Ablenkmittel 14 wird das vom Abspritzelement 10 weggeschleuderte Schmieröl umgelenkt und in eine zu Dichtungen 13 und 24 entgegengesetzte Richtung geleitet, wobei es sich bei der Dichtung 13 um einen zur Gasdichtung vorgesehenen Kolbenring und bei der Dichtung 24 um eine als Öldichtung dienende Wand handelt. Um dies zu erreichen ist das Ablenkmittel 14 in der Figur 1 konusförmig ausgebildet. Eine Alternative besteht darin, das Ablenkmittel 14 bogenförmig auszubilden. Eine weitere Alternative besteht darin, dass das Ablenkmittel 14 nicht -wie es in der Figur 1 dargestellt ist- integrierter Bestandteil der Lagergehäusewand 18 und damit durch die Formgebung der Lagergehäusewand realisiert ist, sondern in Form eines in den Ölbegrenzungsraum 12 eingelegten Ringes. Die in Richtung des Abspritzelements 10 gerichtete Innenfläche dieses Ringes kann wiederum bogenförmig oder konusförmig geformt sein, so dass das im Betrieb des Abgasturboladers 1 vom Abspritzelement 10 weggeschleuderte Schmieröl vom Ring umgelenkt und -wie gewünscht- in die zu den Dichtungen entgegengesetzte Richtung geleitet wird.

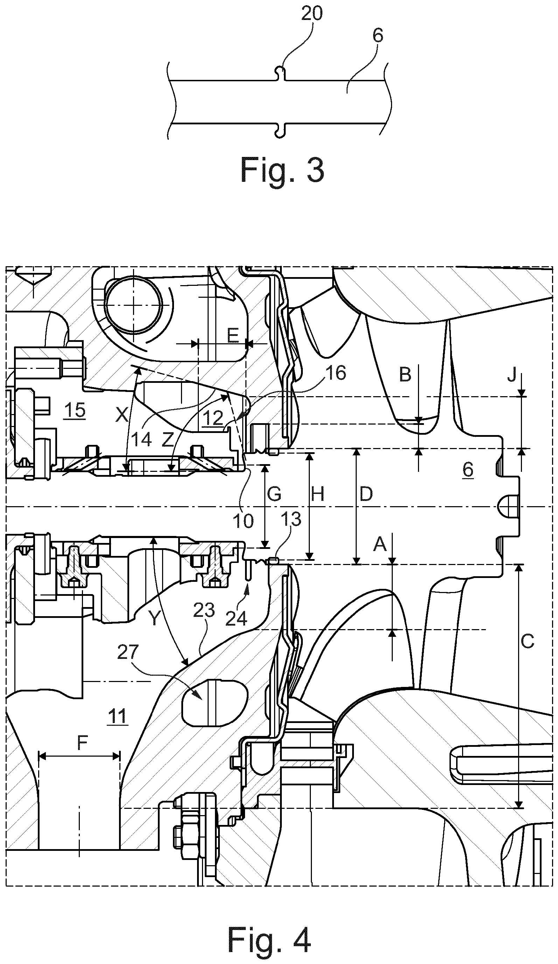

In der Figur 1 handelt es sich beim Abspritzelement 10 um eine Wellenschulter 19. Eine alternative Ausführungsform besteht darin, das Abspritzelement als eine freistehende Schleuderscheibe 20 zu realisieren, wie es in der Figur 3 veranschaulicht ist. Diese freistehende Schleuderscheibe ist ebenfalls auf der Welle 6 vorgesehen. In Axialrichtung vor und hinter der Schleuderscheibe 20 weist die Welle 6 vorzugsweise denselben Durchmesser auf.

Das vom Ablenkmittel 14 umgelenkte und in eine zu den Dichtungen entgegengesetzte Richtung geleitete Schmieröl läuft nach der Umlenkung durch das Ablenkmittel 14 an der oberen Lagergehäusewand 18 entlang, grösstenteils über den Umfang des Ölbegrenzungsraums zum Ölabfluss, teilweise über den Umfang des Lagerflansches zum Ölabfluss und mit einem geringen Anteil bis zum Ende des Lagerflansches, in eine im Lagerflansch 15 gebildete Fangrinne 16, deren dichtungsseitiger Endbereich von einem Wandelement 17 gebildet wird, welches ein Zurückfließen des in der Fangrinne 16 gesammelten Schmieröls in den Spritzkanal 26 verhindert.

Durch das Umlenken des vom Abspritzelement 10 direkt auf das Ablenkmittel 14 gespritzten Schmieröls in eine zu den Dichtungen entgegengesetzte Richtung und das Verhindern eines Zurückfließens des umgelenkten Schmieröls in den Spritzkanal 26 wird in vorteilhafter Weise erreicht, dass im Spritzkanal 26 kein Schmierölstau auftritt, d.h. dass das vom Abspritzelement 10 weggeschleuderte Schmieröl nicht durch in den Abspritzkanal 26 zurückfließendes Schmieröl behindert wird.

Der Ablauf des in der Fangrinne 16 gesammelten Schmieröls erfolgt durch einen unterhalb der Welle 6 angeordneten Ölablaufkanal 11. Dieser reicht bis zu einer Ölablaufmündung 22 des Lagergehäuses 8, durch welche das durch den Ölablaufkanal 11 abfließende Schmieröl aus dem Lagergehäuse 8 abgeführt wird. Der Ölablaufkanal 11 ist im Bereich der Ölablaufmündung 22 des Lagergehäuses 8 zylindrisch ausgebildet und weist zwischen diesem zylindrisch ausgebildeten Bereich und der Welle 6 eine in Richtung der Welle 6 schräg verlaufende Ölablauframpe 23 auf, durch welche der Ölablaufkanal 11 in Richtung zur Welle 6 verbreitert wird. Dies hat den Vorteil, dass der Abfluss des in Richtung der Ölablaufmündung 22 abfließenden Schmierölstroms erleichtert ist und dass das Schmierölaufnahmevermögen des Ölablaufkanals 11 groß ist, so dass die Wahrscheinlichkeit, dass ein bis in den Bereich der Dichtung 13 reichender Schmierölstau auftritt, reduziert ist.

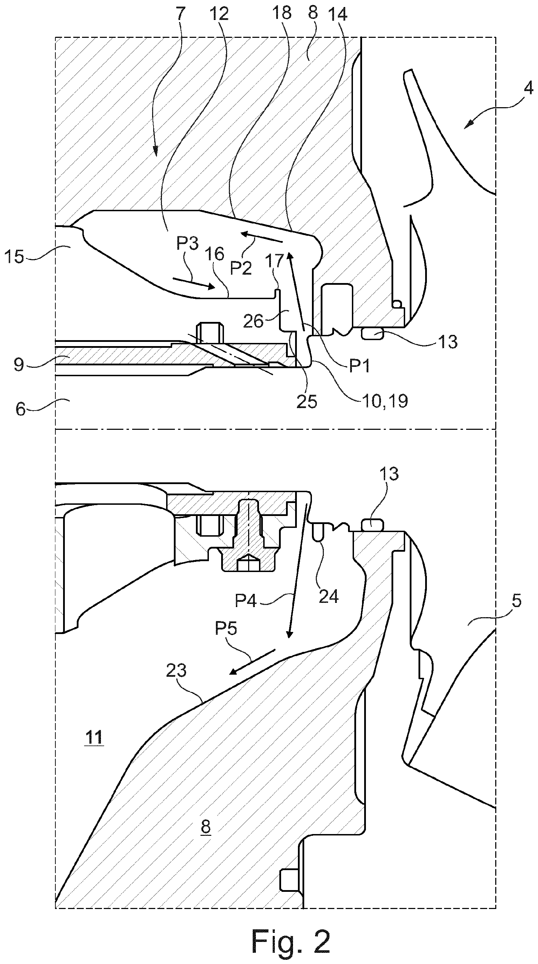

Die Figur 2 zeigt eine vergrößerte Darstellung eines Teilbereichs von Figur 1. In dieser Darstellung ist der Transportweg des aus dem Spalt zwischen dem Radiallager 9 und der Welle 6 austretenden Schmieröls durch Pfeile P1 -P5 veranschaulicht. Das aus dem Spalt zwischen dem Radiallager 9 und der Welle 6 austretende Schmieröl wird am Abspritzelement 10 in Radialrichtung nach außen weggeschleudert, wie es durch den Pfeil P1 dargestellt ist, und trifft direkt auf das Ablenkmittel 14, welches beim dargestellten Ausführungsbeispiel ein konusförmig ausgebildeter Bestandteil des Lagergehäuses 8 ist. An diesem Ablenkmittel 14 wird das Schmieröl umgelenkt und im Ölbegrenzungsraum 12 in die zu den Dichtungen 13, 24 entgegengesetzte Richtung geleitet, wie es durch den Pfeil P2 veranschaulicht ist. Das derart umgelenkte Schmieröl fliesst grösstenteils über den Umfang von Lagergehäuseinnenraum und Lagerflansch zum Ölablauf. Der restliche Anteil wird in der Fangrinne 16 gesammelt, wie es durch den Pfeil P3 veranschaulicht ist. Diese Fangrinne 16 weist auf ihrer den Dichtungen zugewandten Seite ein Wandelement 17 auf, welches verhindert, dass das in der Fangrinne 16 gesammelte Schmieröl zurück in den Abspritzkanal 26 fließen kann. Dadurch ist sichergestellt, dass das vom Abspritzelement 10 durch den Abspritzkanal 26 in Richtung des Pfeiles P1 direkt zum Umlenkmittel 14 weggeschleuderte Schmieröl nicht durch in den Abspritzkanal 26 zurückfließendes Schmieröl behindert wird und im Abspritzkanal 26 ein Schmierölstau entsteht. Von der Welle nach unten weggeschleudertes Schmieröl wird direkt auf die Ablauframpe 23 geleitet, wie es durch den Pfeil P4 veranschaulicht ist, läuft an dieser -wie es durch den Pfeil P5 veranschaulicht ist- nach unten in Richtung zur Ölablaufmündung 22 des Lagergehäuses 8 ab und wird durch diese Ölablaufmündung 22 aus dem Lagergehäuse 8 abgeführt. Durch die Öldichtung 24 wird die Wahrscheinlichkeit, dass das in den Ölablaufkanal 11 geleitete Schmieröl in den Bereich der Gasdichtung 13 gelangt, klein gehalten.

Die Figur 3 zeigt eine Skizze zur Veranschaulichung einer auf einer Welle 6 vorgesehenen freistehenden Schleuderscheibe 20, welche alternativ zur Wellenschulter 19 als Abspritzelement 10 verwendet werden kann. Die Welle 6 weist in Axialrichtung vor und hinter dieser Abspritznase denselben Durchmesser auf.

Die Figur 4 zeigt eine weitere Querschnittsdarstellung eines Teilbereichs eines Abgasturboladers, in welchem die erfindungsgemäßen Komponenten des Abgasturboladers angeordnet sind.

Die bereits oben beschriebene Erfindung stellt eine Wellendichtung bereit, welche unter Ausnutzung von gegebenen Designfreiheitsgraden im Vergleich zu bekannten Wellendichtungen mit denselben geometrischen Randbedingungen eine deutlich verbesserte Robustheit gegen Ölleckage aufweist. Ein besonderer Vorteil einer erfindungsgemäßen Wellendichtung besteht in einem deutlich verbesserten Ölabtransport aus dem Abgasturbolader, einem stark vergrößerten Gehäusevolumen unterhalb der Wellendichtung und einen definierten Transport bzw. einer gezielten Umlenkung des von der Welle abspritzenden Schmieröls weg von dem Bereich, in welchem die Dichtungen angeordnet sind.

In der in der Figur 4 gezeigten weiteren Querschnittsdarstellung sind Parameter veranschaulicht, mittels derer die genannten Vorteile der Erfindung erzielt werden können.

In der Figur 4 bezeichnet der Parameter F die Querschnittsfläche des Ölablaufkanals im Bereich der Ölablaufmündung, wobei der Ölablaufkanal in diesem Bereich zylindrisch ausgebildet ist. An diesen zylindrisch ausgebildeten Bereich des Ölablaufkanals schließt sich in Richtung zur Welle 6 ein erster Rampenbereich an, der relativ zur Welle einen ersten Winkel einschließt, der im Bereich zwischen 45° und 80° liegt. Folglich ist dieser Bereich die Ölablauframpe 23 steil ausgebildet. Die Steilheit der Ölablauframpe 23 in diesem Bereich ist unter anderem durch die Platzierung eines zu Kühlungszwecken vorgesehenen Wasserkanals 27 im Lagergehäuse bedingt.

An diesen steilen Bereich der Ölablauframpe 23 schließt sich in Richtung zur Welle 6 ein etwas flacherer Bereich der Ölablauframpe 23 an. Dieser etwas flachere Bereich schließt relativ zur Welle 6 einen Winkel ein, der im Bereich zwischen 30° und 45° liegt. Der in der Figur 4 gezeigte Parameter Y symbolisiert die Steilheit der Ölablauframpe 23 im jeweiligen Bereich.

Bei dem in der Figur 4 gezeigten Parameter A handelt es sich um den Abstand zwischen der Welle 6 und dem der Welle nächstliegenden Punkt der Ablauframpe 23.

Bei dem in der Figur 4 gezeigten Parameter C handelt es sich um den Abstand zwischen der Welle 6 und dem von der Welle 6 am weitesten entfernten Punkt der Ablauframpe 23. Dieser Punkt bildet die Übergangsstelle von der Ablauframpe 23 in des zylindrisch ausgebildeten Bereich des Ölablaufkanals 11.

Die vorstehend genannten Parameter F, Y, A und C diesen einem verbesserten, insbesondere beschleunigten Ablauf des Schmieröls sowie einem vergrößerten Gehäusevolumen unterhalb der Welle, um im Betrieb möglichst viel Schmieröl aufnehmen zu können, ohne dass dessen Pegel bis zur Welle 6 steigt.

Der Parameter Z bezeichnet den Abspritzwinkel des Schmieröls, in welchem das Schmieröl vom Abspritzelement 10 aus dem Bereich der Welle 6 frei in Richtung des Ablenkmittels 14 gespritzt wird. Auch aus der Figur 4 ist ersichtlich, dass sowohl das Abspritzelement 10 als auch das Ablenkmittel 14 derart geformt sind, dass abgespritzte Schmieröl nicht axial in Richtung der Dichtungen, sondern axial in Gegenrichtung zu den Dichtungen gespritzt bzw. geleitet wird. Der Abspritzwinkel sollte möglichst klein gewählt werden, um das weggespritzte Schmieröl möglichst weit weg von den Dichtungen zu befördern.

Die Parameter X und E definieren einen Abspritzkonus im Lagergehäuse, um aus dem Bereich der Welle 6 im Abspritzwinkel Z abgespritztes Schmieröl umzuleiten und in Gegenrichtung zu den Dichtungen nach hinten ins Lagergehäuse zu befördern. Hierzu müssen der Abspritzwinkel Z, der Winkel des Konus X und die Länge E des Ablenkkonus sowie die umgebende Geometrie so ausgeführt sein, dass das Schmieröl frei aus dem Bereich der Welle 6 auf den Ablenkkonus gespritzt werden kann.

Der Parameter J bezeichnet den Abstand der Welle 6 von dem der Welle nächstliegenden Punkt des Ablenkkonus. Dieser Abstand sollte möglichst groß sein, damit sich das nach dem Auftreffen auf den Ablenkkonus zerstäubende Schmieröl möglicht weit entfernt von den Dichtungen befindet.

Des Weiteren ist in der Figur 4 die Fangrinne 16 veranschaulicht, durch welche verhindert wird, dass vom Ablenkkonus 14 weggefördertes Schmieröl zurück in den Dichtungsbereich läuft.

Ferner ist in der Figur 4 eine als Abschirmung dienende Dichtung 24 gezeigt, die den Bereich der Gasdichtung 13 in einem unterhalb der Welle 6 liegenden Bereich gegen Spritzöl abschirmt.

Mit dem Parameter G ist eine Abschirmung des Quetschöldämpferspaltes des Radiallagers veranschaulicht, wobei G kleiner gewählt ist als der Außendurchmesser H des Radiallagers. Dadurch wird eine direkte Anspritzung der Wellendichtungsradialspalte mit Schmieröl aus dem Radiallager-Außenschmierspalt verhindert.

Mit dem Parameter B ist eine Fangkammer bezeichnet. Diese sollte möglichst groß dimensioniert sein, ist jedoch fertigungsbedingt auf eine Größe beschränkt, die kleiner ist als D/2, wobei D der Durchmesser der Welle 6 ist.

Des Weiteren sind in der Figur 4 Durchmessersprünge veranschaulicht. Der Parameter G ist deutlich kleiner als der Parameter H gewählt, um eine direkte Anspritzung des Radialspaltes bei H durch Schmieröl aus dem Radialspalt bei G zu reduzieren. D ist wiederum größer gewählt als H, um dem Schmieröl durch eine Durchmessererhöhung ein weiteres Hindernis entgegenzusetzen und um D als austrittsseitige Abspritzkante auf der Welle in die vorgelagerte Fangkammer B dienen kann.

Es gelten in vorteilhafter Weise die folgenden Beziehungen:

- F/D > 0,7, wobei F der Durchmesser des zylindrisch ausgebildeten Bereichs des Ölablaufkanals 23 und D der Durchmesser der Welle 6 ist;

- (A+C)/D > 2,7, wobei A der Abstand des von der Ölablaufmündung abgelegenen Endes der Ölablauframpe von der Welle 6, C der Abstand des der Ölablaufmündung näher gelegenen Endes der Ölablauframpe 23 von der Welle 6 und D der Durchmesser der Welle ist,

- G/H < 1, wobei G eine Abschirmung des Quetschöldämpferspaltes und H der Außendurchmesser des Radiallagers ist,

- H/D < 1, wobei H der Außendurchmesser des Radiallagers und D der Durchmesser der Welle ist,

- B/D > 0,2, wobei B die Höhe einer Fangkammer und D der Durchmesser der Welle 6 ist, X/Z < 1, wobei X der Winkel zwischen der Welle 6 und dem Ablenkkonus und Z der Abspritzwinkel des Schmieröls von der Welle in Richtung zum Ablenkkonus ist, und

- (J+sin(X)•E)/D > 0,5, wobei J der Abstand des der Welle nahegelegenen Endes des Ablenkkonus, X der Winkel zwischen der Welle und dem Ablenkkonus, E die axiale Länge des Ablenkkonus und D der Durchmesser der Welle ist.

Bezugszeichenliste

| 1 | Abgasturbolader |
| 2 | Verdichter |
| 3 | Verdichterrad |
| 4 | Turbine |
| 5 | Turbinenrad |
| 6 | Welle |
| 7 | Lagervorrichtung |
| 8 | Lagergehäuse |
| 9 | Radiallager |
| 10 | Abspritzelement |
| 11 | Ölablaufkanal |
| 12 | Ölbegrenzungsraum |
| 13 | Gasdichtung |
| 14 | Ablenkmittel |
| 15 | Lagerflansch |
| 16 | Fangrinne |
| 17 | Wandelement |
| 18 | Lagergehäusewand |
| 19 | Wellenschulter |
| 20 | Abspritznase |
| 21 | Ausnehmung im Lagerflansch |
| 22 | Ölablaufmündung des Lagergehäuses |
| 23 | Ölablauframpe |
| 24 | Öldichtung |
| 25 | Stufe |
| 26 | Spritzkanal |
| 27 | Wasserkanal |
| P1 - P5 | Pfeile |

**Patentansprüche**

**1.** Abgasturbolader (1), welcher eine zwischen einem Verdichter (2) und einer Turbine (4) angeordnete, für eine Lagerung einer Welle (6) ausgebildete Lagervorrichtung (7) enthält, welche ein Lagergehäuse (8) aufweist, in welchem ein ölgeschmiertes Lager (9) zur Lagerung der Welle angeordnet ist,

- wobei die Welle ein sich in Umfangsrichtung erstreckendes Abspritzelement (10) zum Wegschleudern von Schmieröl aufweist,
- wobei das Lagergehäuse einen Ölablaufkanal (11) für eine Abfuhr des Schmieröls aus dem Lagergehäuse (8) aufweist,
- wobei der Innenbereich des Lagergehäuses einen Ölbegrenzungsraum (12) bildet, der mit zwischen der Welle und dem Lagergehäuse angeordneten Dichtungen (13, 24) abgedichtet ist,
- wobei der Ölbegrenzungsraum ein Ablenkmittel (14) aufweist, welches derart geformt ist, dass im Betrieb des Abgasturboladers vom Abspritzelement weggeschleudertes Schmieröl vom Ablenkmittel umgelenkt und in die zu den Dichtungen entgegengesetzte Richtung geleitet wird, und
- wobei der Ölbegrenzungsraum in der Umgebung des Abspritzelements derart ausgebildet ist, dass das im Betrieb des Abgasturboladers vom Abspritzelement weggeschleuderte Schmieröl direkt vom Abspritzelement auf das Ablenkmittel überführbar ist,
- **dadurch gekennzeichnet, dass** das Abspritzelement (10) derart geformt ist, dass das vom Abspritzelement weggespritzte Schmieröl eine radiale und eine axiale Richtungskomponente hat, wobei die axiale Richtungskomponente in die zu den Dichtungen entgegengesetzte Richtung gerichtet ist.

2. Abgasturbolader nach Anspruch 1, bei welchem der Ölbegrenzungsraum in einem axial neben dem Abspritzelement (10) angeordneten Abschnitt der Welle (6) zur Welle hin durch einen mit dem Lagergehäuse (8) verbundenen Lagerflansch (15) begrenzt ist, und eine Fangrinne (16) zum Auffangen des vom Ablenkmittel(14) her eintreffenden Schmieröls aufweist, wobei die Fangrinne mindestens ein Wandelement (17) zur Verhinderung des Zurücklaufens des vom Ablenkmittel umgelenkten Schmieröls in Richtung zu den Dichtungen aufweist und derart geformt ist, dass sie im Betrieb des Abgasturboladers Schmieröl aus der Fangrinne (16) in den Ölablaufkanal (11) leitet.

3. Abgasturbolader nach Anspruch 1 oder 2, bei welchem das Ablenkmittel (14) Bestandteil der Lagergehäusewand (18) oder ein in den Ölbegrenzungsraum (12) eingelegter Ring ist.

4. Abgasturbolader nach einem der vorhergehenden Ansprüche, bei welchem das Ablenkmittel (14) konusförmig oder bogenförmig ausgebildet ist.

5. Abgasturbolader nach einem der vorhergehenden Ansprüche, bei welchem das Abspritzelement (10) eine Wellenschulter (19) ist, oder bei welchem das Abspritzelement (10) eine freistehende Schleuderscheibe (20) ist.

6. Abgasturbolader nach einem der vorhergehenden Ansprüche, bei welchem sich der Querschnitt des Ölbegrenzungsraums (12) im Bereich zwischen dem Abspritzelement (10) und dem Ablenkmittel (14) mit zunehmenden Abstand von der Welle (6) vergrößert.

7. Abgasturbolader nach Anspruch 6, bei welchem sich der Querschnitt des Ölbegrenzungsraums (12) im Bereich zwischen dem Abspritzelement (10) und dem Ablenkmittel (14) mit zunehmenden Abstand von der Welle (6) stufenweise vergrößert.

8. Abgasturbolader nach Anspruch 6 oder 7, bei welchem die Vergrößerung des Querschnitts des Ölbegrenzungsraums (12) im Bereich zwischen dem Abspritzelement (10) und dem Ablenkmittel (14) zumindest teilweise durch eine Ausnehmung (21) in einem Lagerflansch (15) gebildet ist.

9. Abgasturbolader nach einem der vorhergehenden Ansprüche, bei welchem der Ölablaufkanal (11) im Bereich einer Ölablaufmündung (22) des Lagergehäuses (8) zylindrisch ausgebildet ist und zwischen diesem zylindrisch ausgebildeten Bereich und der Welle (6) eine in Richtung der Welle schräg verlaufende Ölablauframpe (23) aufweist, durch welche der Ölablaufkanal (11) in Richtung zur Welle (6) verbreitert ist.

10. Abgasturbolader nach Anspruch 9, bei welchem die Ölablauframpe in einem an den zylindrisch ausgebildeten Bereich anschließenden ersten Rampenbereich relativ zur Welle einen ersten Winkel einschließt, der im Bereich zwischen 45° und 80° liegt, vorzugsweise bei welchem die Ölablauframpe in einem an den ersten Rampenbereich anschließenden zweiten Rampenbereich relativ zur Welle einen zweiten Winkel einschließt, der im Bereich zwischen 30° und 45° liegt.

11. Abgasturbolader nach einem der vorhergehenden Ansprüche, welcher eine Abschirmung (24) aufweist, die zur Abschirmung der Dichtungen gegen gespritztes Schmieröl in einem Bereich unterhalb der Welle (6) angeordnet ist.

12. Abgasturbolader nach einem der Ansprüche 9 bis 11, bei welchem für den Durchmesser des zylindrisch ausgebildeten Bereichs des Ölablaufkanals (11) relativ zum Durchmesser der Welle (6) des Abgasturboladers die folgende Beziehung gilt:

$$F/D > 0{,}7,$$

wobei F der Durchmesser des zylindrischen ausgebildeten Bereichs des Ölablaufkanals und D der Durchmesser der Welle des Abgasturboladers ist.

13. Abgasturbolader nach einem der Ansprüche 9 bis 12, bei welchem die folgende Beziehung gilt:

$$(A + C)/D > 2{,}7,$$

wobei A der Abstand des von der Ölablaufmündung abgelegenen Endes der Ölablauframpe von der Welle, C der Abstand des der Ölablaufmündung näher gelegenen Endes der Ölablauframpe von der Welle und D der Durchmesser der Welle ist.

14. Abgasturbolader nach einem der Ansprüche 9 bis 13, bei welchem zumindest eine der folgenden Beziehungen gilt:

$$G/H < 1,$$

wobei G eine Abschirmung eines Quetschöldämpferspaltes und H der Außendurchmesser eines Radiallagers des Abgasturboladers ist, und/oder

$$H/D < 1,$$

wobei H der Außendurchmesser eines Radiallagers des Abgasturboladers und D der Durchmesser der Welle ist,
und/oder

$$B/D > 0,2,$$

wobei B die Höhe einer Fangkammer und D der Durchmesser der Welle ist, und/oder

$$X/Z < 1,$$

wobei X der Winkel zwischen der Welle und dem Ablenkkonus und Z der Abspritzwinkel des Schmieröls von der Welle in Richtung zum Ablenkkonus ist.

15. Abgasturbolader nach einem der Ansprüche 9 bis 14, bei welchem die folgende Beziehung gilt:

$$(J + \sin(X) \cdot E)/D > 0,5,$$

wobei J der Abstand des der Welle nahegelegenen Endes des Ablenkkonus, X der Winkel zwischen der Welle und dem Ablenkkonus, E die axiale Länge des Ablenkkonus und D der Durchmesser der Welle ist.

## Claims

1. Exhaust gas turbocharger (1) which comprises a bearing apparatus (7) which is arranged between a compressor (2) and a turbine (4), is configured for mounting a shaft (6), and has a bearing housing (8), in which an oil-lubricated bearing (9) for mounting the shaft is arranged,

    - the shaft having a splashing element (10) which extends in the circumferential direction for throwing off lubricating oil,
    - the bearing housing having an oil outlet channel (11) for discharge of the lubricating oil from the bearing housing (8),
    - the inner region of the bearing housing having an oil bounding space (12) which is sealed by way of seals (13, 24) which are arranged between the shaft and the bearing housing,
    - the oil bounding space having a deflection means (14) which is shaped in such a way that lubricating oil which is thrown off by the splashing element during operation of the exhaust gas turbocharger is deflected by the deflection means and is guided in the opposite direction to the seals, and
    - the oil bounding space being configured in the surrounding area of the splashing element in such a way that the lubricating oil which is thrown off by the splashing element during operation of the exhaust gas turbocharger can be transferred directly from the splashing element to the deflection means,
    - **characterized in that** the splashing element (10) is shaped in such a way that the lubricating oil which is sprayed away from the splashing element has a radial and an axial directional component, the axial directional component being directed in the opposite direction to the seals.

2. Exhaust gas turbocharger according to Claim 1, in the case of which the oil bounding space is delimited towards the shaft in a section of the shaft (6) which is arranged axially next to the splashing element (10) by way of a bearing flange (15) which is connected to the bearing housing (8), and has a collection channel (16) for collecting the lubricating oil which arrives from the deflection means (14), the collection channel having at least one wall element (17) for preventing the lubricating oil which is deflected by the deflection means from running back in the direction of the seals and is shaped in such a way that it guides lubricating oil out of the collection channel (16) into the oil outlet channel (11) during operation of the exhaust gas turbocharger.

3. Exhaust gas turbocharger according to Claim 1 or 2, in the case of which the deflection means (14) is a constituent part of the bearing housing wall (18) or a ring which is inserted into the oil bounding space (12).

4. Exhaust gas turbocharger according to one of the preceding claims, in the case of which the deflection means (14) is of conical or arcuate configuration.

5. Exhaust gas turbocharger according to one of the preceding claims, in the case of which the splashing element (10) is a shaft shoulder (19), or in the case of which the splashing element (10) is a freestanding centrifugal disc (20).

6. Exhaust gas turbocharger according to one of the preceding claims, in the case of which the cross section of the oil bounding space (12) increases in the region between the splashing element (10) and the deflection means (14) as the spacing from the shaft (6) increases.

7. Exhaust gas turbocharger according to Claim 6, in the case of which the cross section of the oil bounding space (12) increases in a stepped manner in the region between the splashing element (10) and the deflection means (14) as the spacing from the shaft (6) increases.

8. Exhaust gas turbocharger according to Claim 6 or 7, in the case of which the increase in the cross section of the oil bounding space (12) in the region between the splashing element (10) and the deflection means (14) at least partially by way of a recess (21) in a bearing flange (15).

9. Exhaust gas turbocharger according to one of the preceding claims, in the case of which the oil outlet channel (11) is of cylindrical configuration in the region of an oil outlet opening (22) of the bearing housing (8), and has an oil outlet ramp (23) which runs obliquely in the direction of the shaft between this region of cylindrical configuration and the shaft (6), by way of which oil outlet ramp (23) the oil outlet channel (11) is widened in the direction of the shaft (6).

10. Exhaust gas turbocharger according to Claim 9, in the case of which, in a first ramp region which adjoins the region of cylindrical configuration, the oil outlet ramp encloses a first angle relative to the shaft, which first angle lies between 45° and 80°, preferably in the case of which, in a second ramp region which adjoins the first ramp region, the oil outlet ramp encloses a second angle relative to the shaft, which second angle lies between 30° and 45°.

11. Exhaust gas turbocharger according to one of the preceding claims which has a shield (24) which is arranged to shield the seals against sprayed lubricating oil in a region below the shaft (6).

12. Exhaust gas turbocharger according to one of Claims 9 to 11, in the case of which the following relationship applies to the diameter of the region of cylindrical configuration of the oil outlet channel (11) relative to the diameter of the shaft (6) of the exhaust gas turbocharger:

$$F/D > 0.7,$$

F being the diameter of the region of cylindrical configuration of the oil outlet channel, and D being the diameter of the shaft of the exhaust gas turbocharger.

13. Exhaust gas turbocharger according to one of Claims 9 to 12, in the case of which the following relationship applies:

$$(A+C)/D > 2.7,$$

A being the spacing of that end of the oil outlet ramp which is remote from the oil outlet opening from the shaft, C being the spacing of that end of the oil outlet ramp which lies closer to the oil outlet opening from the shaft, and D being the diameter of the shaft.

14. Exhaust gas turbocharger according to one of Claims 9 to 13, in the case of which at least one of the following relationships applies:

$$G/H < 1,$$

G being a shield of a trapped oil damper gap, and H being the external diameter of a radial bearing of the exhaust gas turbocharger, and/or

$$H/D < 1,$$

H being the external diameter of a radial bearing of the exhaust gas turbocharger, and D being the diameter of the shaft, and/or

$$B/D > 0.2,$$

B being the height of a collection chamber, and D being the diameter of the shaft, and/or

$$X/Z < 1,$$

X being the angle between the shaft and the deflection cone, and Z being the splashing angle of the lubricating oil from the shaft in the direction of the deflection cone.

15. Exhaust gas turbocharger according to one of Claims 9 to 14, in the case of which the following relationship applies:

$$(J + \sin(X) \cdot E)/D > 0.5,$$

J being the spacing of that end of the deflection cone which lies close to the shaft, X being the angle between the shaft and the deflection cone, E being the axial length of the deflection cone, and D being the diameter of the shaft.

**Revendications**

1. Turbocompresseur à gaz d'échappement (1) qui contient un dispositif de palier (7) disposé entre un compresseur (2) et une turbine (4), conçu pour supporter un arbre (6) et comportant un logement de palier (8) dans lequel un palier oléo-lubrifié (9) est disposé pour supporter l'arbre,

- l'arbre comportant un élément de pulvérisation (10) qui s'étend dans la direction circonférentielle et qui est destiné à rejeter l'huile de lubrification,
- le logement de palier comportant un conduit de purge d'huile (11) destiné à évacuer l'huile de lubrification du logement de palier (8),
- la zone intérieure du logement de palier formant un espace de confinement d'huile (12) qui est obturé par des garnitures d'étanchéité (13, 24) disposées entre l'arbre et le logement de palier,
- l'espace de confinement d'huile comportant un moyen de déviation (14) qui est formé de manière que l'huile de lubrification rejetée par l'élément de pulvérisation pendant le fonctionnement du turbocompresseur à gaz d'échappement soit déviée par le moyen de déviation et amenée dans la direction opposée aux garnitures d'étanchéité, et
- l'espace de confinement d'huile étant formé au voisinage de l'élément de pulvérisation de manière que l'huile de lubrification rejetée par l'élément de pulvérisation pendant le fonctionnement du turbocompresseur à gaz d'échappement puisse être transférée directement de l'élément de pulvérisation au moyen de déviation,
- **caractérisé en ce que** l'élément de pulvérisation (10) est formé de manière que l'huile de lubrification pulvérisée par l'élément de pulvérisation comporte une composante directionnelle radiale et une composante directionnelle axiale, la composante directionnelle axiale étant orientée dans la direction opposée aux garnitures d'étanchéité.

2. Turbocompresseur à gaz d'échappement selon la revendication 1, dans lequel l'espace de confinement d'huile est délimité par une bride de palier (15) reliée au logement de palier (8) vers l'arbre dans une portion de l'arbre (6) qui est disposée axialement à côté de l'élément de pulvérisation (10), et comporte un conduit de collecte (16) destiné à recueillir l'huile de lubrification provenant du moyen de déviation (14), le conduit de collecte comportant au moins un élément de paroi (17) destiné à empêcher l'huile de lubrification déviée par le moyen de déviation de retourner en direction des garnitures d'étanchéité et étant formé de manière à acheminer l'huile de lubrification du conduit de collecte (16) jusque dans le canal de purge d'huile (11) pendant le fonctionnement du turbocompresseur à gaz d'échappement.

3. Turbocompresseur à gaz d'échappement selon la revendication 1 ou 2, dans lequel le moyen de déviation (14) fait partie de la paroi de logement de palier (18) ou d'une bague insérée dans l'espace de confinement d'huile (12).

4. Turbocompresseur à gaz d'échappement selon l'une des revendications précédentes, dans lequel le moyen de déviation (14) est conçu comme un cône ou un arc.

5. Turbocompresseur à gaz d'échappement selon l'une des revendications précédentes, dans lequel l'élément de pulvérisation (10) est un épaulement d'arbre (19), ou dans lequel l'élément de pulvérisation (10) est un disque centrifuge libre (20).

6. Turbocompresseur à gaz d'échappement selon l'une des revendications précédentes, dans lequel la section transversale de l'espace de confinement d'huile (12) augmente dans la zone située entre l'élément de pulvérisation (10) et le moyen de déviation (14) à mesure que la distance à l'arbre (6) augmente.

7. Turbocompresseur à gaz d'échappement selon la revendication 6, dans lequel la section transversale de l'espace de confinement d'huile (12) dans la zone située entre l'élément de pulvérisation (10) et le moyen de déviation (14) augmente par paliers à mesure que la distance à l'arbre (6) augmente.

8. Turbocompresseur à gaz d'échappement selon la revendication 6 ou 7, dans lequel l'augmentation de la section transversale de l'espace de confinement d'huile (12) dans la zone située entre l'élément de pulvérisation (10) et le moyen de déviation (14) est formée au moins partiellement par un évidement (21) ménagé dans une bride de palier (15).

9. Turbocompresseur à gaz d'échappement selon l'une des revendications précédentes, dans lequel le canal de purge d'huile (11) est cylindrique au niveau d'une ouverture de purge d'huile (22) du logement de palier (8) et comporte entre cette zone cylindrique et l'arbre (6) une rampe de purge d'huile (23) qui s'étend obliquement en direction de l'arbre et à travers laquelle le canal de purge d'huile (11) est élargi en direction de l'arbre (6).

10. Turbocompresseur à gaz d'échappement selon la revendication 9, dans lequel la rampe de purge d'huile dans une première zone de rampe attenante à la zone cylindrique forme avec l'arbre un premier angle qui est compris entre 45° et 80°, de préférence dans lequel la rampe de purge d'huile forme avec l'arbre, dans une deuxième zone de rampe attenante à la première zone de rampe, un deuxième angle qui est compris entre 30° et 45°.

**11.** Turbocompresseur à gaz d'échappement selon l'une des revendications précédentes, qui comporte un écran (24) qui est disposé dans une zone située au-dessous de l'arbre (6) afin de protéger les garnitures d'étanchéité contre les projections d'huile de lubrification.

**12.** Turbocompresseur à gaz d'échappement selon l'une des revendications 9 à 11, dans lequel la relation suivante s'applique au diamètre de la zone cylindrique du canal de purge d'huile (11) par rapport au diamètre de l'arbre (6) du turbocompresseur à gaz d'échappement :

$$F/D > 0,7,$$

F étant le diamètre de la zone cylindrique du canal de purge d'huile et D étant le diamètre de l'arbre du turbocompresseur à gaz d'échappement.

**13.** Turbocompresseur à gaz d'échappement selon l'une des revendications 9 à 12, dans lequel la relation suivante s'applique :

$$(A + C)/D > 2,7,$$

A étant la distance de l'extrémité de la rampe de purge d'huile de l'arbre qui est éloignée de l'ouverture de purge d'huile, C étant la distance de l'extrémité de la rampe de purge d'huile de l'arbre qui est la plus proche de l'ouverture de purge d'huile et D étant le diamètre de l'arbre.

**14.** Turbocompresseur à gaz d'échappement selon l'une des revendications 9 à 13, dans lequel l'une au moins des relations suivantes s'applique :

$$G/H < 1,$$

G étant un écran d'un intervalle d'amortisseur d'huile de compression et H étant le diamètre extérieur d'un palier radial du turbocompresseur à gaz d'échappement, et/ou

$$H/D < 1,$$

H étant le diamètre extérieur d'un palier radial du turbocompresseur à gaz d'échappement et D étant le diamètre de l'arbre, et/ou

$$B/D > 0,2,$$

B étant la hauteur d'une chambre de collecte et D étant le diamètre de l'arbre, et/ou

$$X/Z < 1,$$

X étant l'angle formé entre l'arbre et le cône de déviation et Z étant l'angle de pulvérisation de l'huile de lubrification de l'arbre en direction du cône de déviation.

**15.** Turbocompresseur à gaz d'échappement selon l'une des revendications 9 à 14, dans lequel la relation suivante s'applique :

$$(J + \sin(X) \cdot E)/D > 0,5,$$

J étant la distance de l'extrémité du cône de déviation la plus proche de l'arbre, X étant l'angle formé entre l'arbre et le cône de déviation, E étant la longueur axiale du cône de déviation, et D étant le diamètre de l'arbre.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015014613 A1
- DE 102013005167 B3
- US 9988976 B2